Europäisches Patentamt

European Patent Office

Office européen des brevets

(11) Publication number: **0 430 283 A2**

# EUROPEAN PATENT APPLICATION

(21) Application number: 90122972.4

(51) Int. Cl.⁵: **G11B 20/14**

(22) Date of filing: 30.11.90

(30) Priority: 30.11.89 JP 311327/89

(43) Date of publication of application:
05.06.91 Bulletin 91/23

(84) Designated Contracting States:
DE ES GB IT NL Bulletin 1

(71) Applicant: SONY MAGNESCALE INC.
Toyo Building 3-9-17 Nishigotanda
Shinagawa-ku Tokyo(JP)

(72) Inventor: Sekiguchi, Keisuke, c/o Sony
Magnescale Inc.
9-17, Nishigotanda 3-chome
Shinagawa-ku, Tokyo(JP)

(74) Representative: TER MEER - MÜLLER -
STEINMEISTER & PARTNER
Mauerkircherstrasse 45
W-8000 München 80(DE)

(54) Method and system for magnetically recording information on recording medium.

(57) A system and method for magnetically recording data on a predetermined track (control track) of a recording medium (video tape)(20) in which a converting circuit (8-14) converts data having a predetermined number of bits into new data having another predetermined number of bits in which consecutive ocurrences of at least one of a high level or a low level data component is limited to a predetermined number (,e.g., 1) and a Bi-phase mark modulation circuit (12) carries out the Bi-phase mark modulation of the data derived from the converting circuit in a special bi-phase (mark) modulation method.

FIG.1

# METHOD AND SYSTEM FOR MAGNETICALLY RECORDING INFORMATION ON RECORDING MEDIUM

## BACKGROUND OF THE INVENTION:

(1) Field of the invention:

The present invention relates to a method and system for magnetically recording information on a recording medium in which, e.g., a control signal having a constant pitch for controlling a speed of the recording medium is recorded on a control track of the recording medium.

(2) Background of the art:

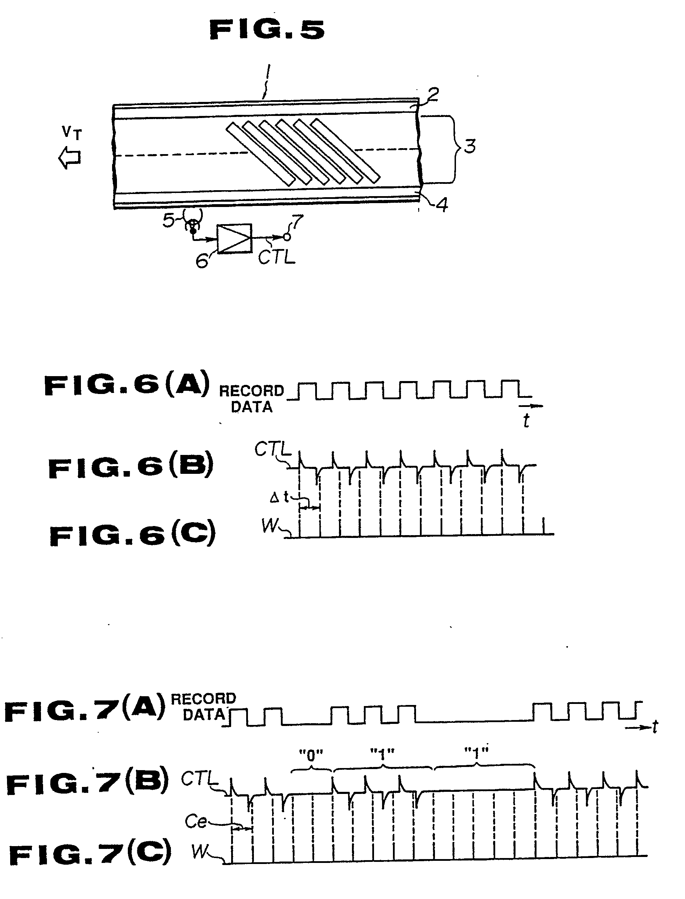

Fig. 5 shows a video tape and a part of a video tape recorder.

A control track 4 is provided on an elongated end of a video tape 1, to control a tape running speed in a video tape recorder (VTR). The video tape recorder includes a plurality of oblique video tracks 3, an audio track 2, and a control track 4. The VTR includea a play-back head 5 used for tracking the control track, a reproducing amplifier 6, and a connection terminal 7. The control track 4 records a magnetic pattern (magnetic record data) of a rectangular waveform having a predetermined pitch thereon (Fig. 6(A)).

If the video tape 1 is driven at a constant speed in a direction $V_T$, the magnetic record data is produced as shown Fig. 6 (A). A differential action of the playback head 5 causes a pulse-shaped control signal CTL as shown in Fig. 6 (B), to be output from the connection terminal 7. A frequency of the control signal CTL on the normal tape running speed is 30 HZ in NTSC (National Television System Committee) or 25 HZ in PAL (Phase Alternation by Line) and SECAM (Sequentiel a Memoire).

In general, video tape such as used for movie recording is produced by means of a contact printing method with a mother tape on which a reversed magnetic pattern is formed. A production volume of slave tape (tape on which data from a mother tape will be recorded) yields approximately 5000 video tape cassettes. Hence, it is desirable that auxiliary data consisting of, for example, an identification number of the used printing apparatus, an identification number of the slave tape, and data on the number of printings of the mother tape already carried out are additively recorded on the video tape. The auxiliary data may further include the identification number of a manufacturer and identification number of a video software.

A method of using the control track 4 for recording such auxiliary data has been adopted. In the method, e.g., an output signal of a capstan frequency generator (capstain FG) is first used in place of the control signal CTL to generate a window signal W (Fig. 7(C)) having a period t slightly longer than 1/2 period of the control signal CTL. Then, suppose that a cell Ce is referred to as a space between each pulse of the window signal. At least one pulse of the control signal CTL is present between each cell in the normal state. On the other hand, as shown in Fig. 7 (A), if the rectangular wave is interrupted, or irregular for a predetermined portion of the recorded data, the cell in which no CTL pulse of the control signal is included can be prepared.

For example, if the number of cells having no pulse Ce three or less, it is defined as low level "0". If the number of cells having no pulse is four or more, it is defined as high level "1". Thus, serial digital data can be recorded as shown in Fig. 7 (B).

However, in the method shown in Figs. 7 (A) through 7 (C), a mechanism for generating the window signal W (Fig. 7 (C)) whose frequency is proportional to the tape speed as different from the control signal CTL is necessary. This is inconvenient in that the mechanism becomes exceedingly complex.

In this case, as shown in Fig. 7 (B), the control signal CTL containsa long pulse portion in which no leading pulse edge is present. Therefore, in a so-called self clock method it is difficult to generate the window signal W from the control signal CTL since the pulse portions are irregular.

In addition, since both window signal W and control signal CTL have different periods and are not synchronized in phase with each other, it is necessary to set a large number of cells indicating "1s" or "0s" in order to accurately determine the respective signal levels according to the number of cells Ce in which no pulse is present and the number of cells Ce having a pulse. Since in the case where the quantity of information of the auxiliary data to be recorded is low, the date is printed repeatedly over and over continuously on the control track. This is inconvenient in that a redundance of data is very large.

## SUMMARY OF THE INVENTION:

It is an object of the present invention to provide a method and system for magnetically recording information on a recording medium which can achieve recording of the auxiliary data on the control track with relatively small redundance and which can achieve simplification of the mechanism portion in which self-clocking is enabled by means of the control signal.

The above-described objects can be achieved by providing a system for recording data on a predetermined track of a recording medium, comprising: a) a first circuit for generating and transmitting data having a predetermined number of bits; b) a second circuit responsive to the data derived from the first circuit for converting the data into new data in which consecutive ocurrences of at least one of a high level or a low level data component is limited to a predetermined value; c) a third circuit for Bi-phase mark modulating the new data derived by the second circuit; and d) a fourth circuit for recording the Bi-phase mark modulated data onto the predetermined track.

According to another aspect of the invention, the above-described objects can also be achieved by providing a method for recording data on a predetermined track of a recording medium, comprising the steps of: a) generating and transmitting data having a predetermined number of bits; b) converting the data into new data in which consecutive ocurrences of at least one of a high level or a low level data component is limited to a predetermined value; c) Bi-phase mark modulating the new data derived in the step b; and d) recording the FM modulated data onto the predetermined track.

## BRIEF DESCRIPTION OF THE DRAWINGS:

Fig. 1 is a simplified circuit block diagram of a recording portion of a system for magnetically recording information on a tape in a first preferred embodiment according to the present invention.

Figs. 2 (A) through 2 (E) are timing charts of signals of essential circuits shown in Fig. 1.

Fig. 3 is a simplified circuit block diagram of a reproducing portion of the system for magnetically recording information on tape according to the first preferred embodiment.

Figs. 4 (A) through 4 (H) are timing charts of respective signals in the first preferred embodiment.

Fig. 5 shows a tape format of a video tape.

Figs. 6 (A) through 6 (C) are signals of respective circuits before modulation is carried out.

Figs. 7 (A) through 7 (B) are signals after the modulation is carried out in a previously proposed magnetic recording system described in the BACKGROUND OF THE INVENTION.

## DETAILED DESCRIPTION OF THE PREFERRED EMBODIMENTS:

Reference will hereinafter be made to the drawings in order to facilitate a better understanding of the present invention.

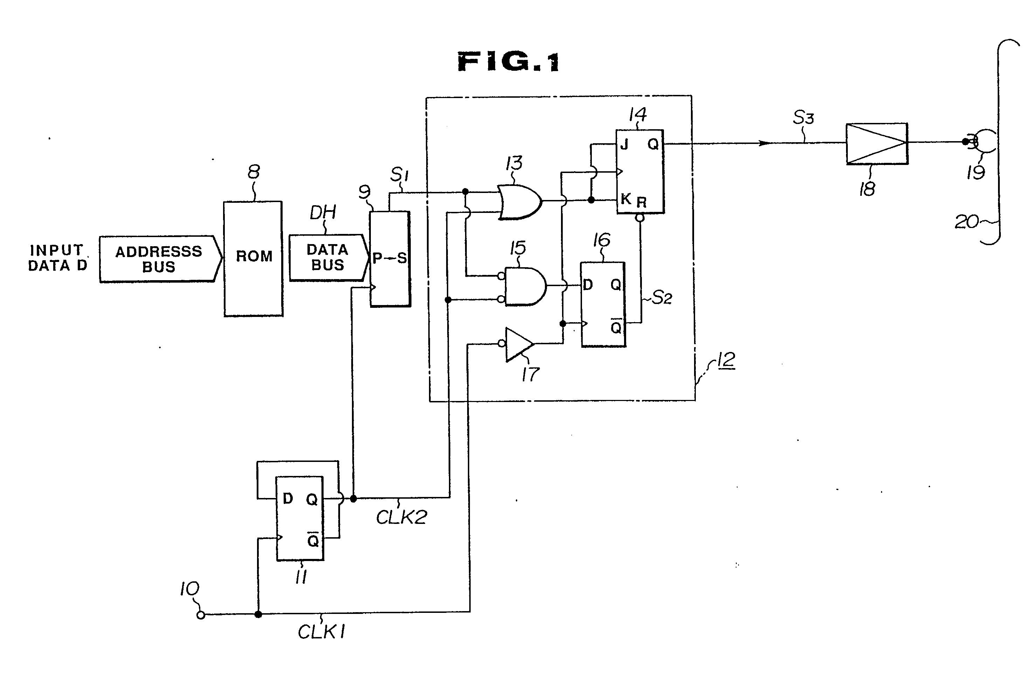

Figs. 1 through 4 show a first preferred embodiment of a system for magnetically recording information on a video tape to which the present invention is applciable.

In the first preferred embodiment, the present invention is applicable to a system in which auxiliary data is recorded together with a control signal on a control track of a video tape.

Fig. 1 shows a recording portion of the first preferred embodiment. In Fig. 1, numeral 8 denotes a ROM (Read Only Memory) as a conversion table to convert eight bit data D into 16-bit data DH. The data D is supplied to the eight bit address bus, the data DH after the conversion being read from the 16-bit data bus of the ROM 8. The action of the coversion table is to convert the eight bit data D (values 0 through 255) into data 16 bit data DH in which two or more low level "0" intervals do not occur adjacently.

In general, the n (n denotes a positive integer) bit data ( $a_{n-1}$, $a_{n-2}$, ---, $a_0$) corresponds to 2 n bit data ($1a_{n-1}$, $1a_{n-2}$' ---, $1a_0$), respectively, the 2n bit data can be prevented from containing two or more adjacent low level "0s" in the 2 n bit data. However, although the 8-bit data contains only 256 different bit patterns, the 16-bit data may contain 65536 different bit patterns. Therefore, the required 16-bit data are selected from the ROM table data so as to obtain to 16 bit data in which the low level "0" does not occur consecutively even if derived from eight bit data in which "0" values do occur consecutively and, the high level "1" values between "0" and "0" always occur in sequences of two or more as shown in the Table. Although various types of methods may be considered as the coversion method, the continuation of "0s" may be held below a predetermined number.

TABLE 1

| 8-bit data (decimal Repre.) | 16-bit data |
|---|---|
| 9 | 1101101101110110 |
| 10 | 1111101101110110 |
| 11 | 1111011101110110 |
| 249 | 1110110110111111 |
| 250 | 1101110110111111 |

The data DH of 16 bits read from the ROM 8 is supplied to a serial-to-parallel (P/S) converter (shift register) 9. In addition, numeral 10 denotes an input terminal.

In addition, a clock pulse CLK 1 having a predetermined frequency is externally supplied to the input terminal 10. The clock pulse CLK 1 is converted into a clock pulse CLK 2 having half the frequancy of CLK 1, via a D type flip-flop circuit 11 as a frequency divider. The clock pulse CLK 2 is supplied to the clock terminal of a parallel-to-serial converter 9.

Numeral 12 denotes a modulation circuit for carrying out a special bi-phase mark modulation. Bi-phase mark modulation is a modulation method in which a level inversion is always carried out at a boundary of an interval (bit cell) representing each bit, the level inversion is carried out at an intermediate time (center) of the bit cell when the data indicates the high level, and the level inversion is not carried out when the data indicates the low level "0". This Bi-phase modulation is a kind of FM modulation and also a channel coding.

The special bi-phase mark modulation is the same as above mentioned Bi-phase mark modulation except that the level inversion is not carried out at the boundary between the bit cell of the data of "0" and the bit cell of the subsequent data "1".

The reason that the special bi-phase mark modulation is used is as follows:

In normal bi-phase mark modulation, if the low level "0" is continued by an odd number, a phase relationship before and after the low level of "0" is reversed. Therefore, if the post-modulation signal is used as the control signal, a phase on a rising (or falling) edge of the pulse is changed by $180°$. This is very inconvenient. On the other hand, in the special bi-phase mark modulation of the preferred embodiment, the phase relationship before and after the low level of "0" can be maintained. The phase of the rising and falling edge of each pulse is always the same.

The speed servo control using the control signal is advantageously preferable.

Next, a specific circuit construction of the modulation circuit 12 will be described below.

As shown in Fig. 1, a signal $S_1$ output serially from a parallel/serial converter 9 is supplied into one input terminal of an OR gate circuit 13 and an input terminal of a negative logic AND gate circuit 15. The clock pulse CLK2 output from the D type flip-flop circuit 11 is supplied to the other input terminal of an OR gate circuit 13 and the other input terminal of the AND gate circuit 15. Then, since the output signal of the OR gate circuit 13 is supplied to the J and K terminals of a JK flip-flop circuit 14 of a syncronization reset type, and the output signal of the AND circuit 15 is supplied to a D terminal of the D type flip-flop circuit 16. The clock pulse CLK1 supplied to the input terminal 10 is supplied to clock terminals ofthe flip-flop circuits 14 and 16 via an inverter circuit 17, respectively.

In addition the inverted output signal $S_2$ of the D-type flip-flop circuit 16 is supplied to the reset terminal of the J-K flip-flop circuit 14. The output signal of the AND gate circuit 15 is supplied to the D type flip-flop circuit 16, the clock pulse CLK1 supplied to the input terminal 10 is supplied to the respective clock terminals of the flip-flop circuits 14 and 16 via an inverter 17.

As mentioned above, the reversed output signal $S_2$ of the D type flip-flop circuit 16 is supplied to the reset terminal of the J-K flip-flop circuit 14. Also, the output signal $S_3$ of the J-K flip-flop circuit 14 (,i.e., output signal of the modulation circuit 12) is supplied to a recording head 19 via the recording amplifier 18. A magnetizing pattern based on the output signal is recorded on a control track (refer to Fig. 5) of a video tape 20.

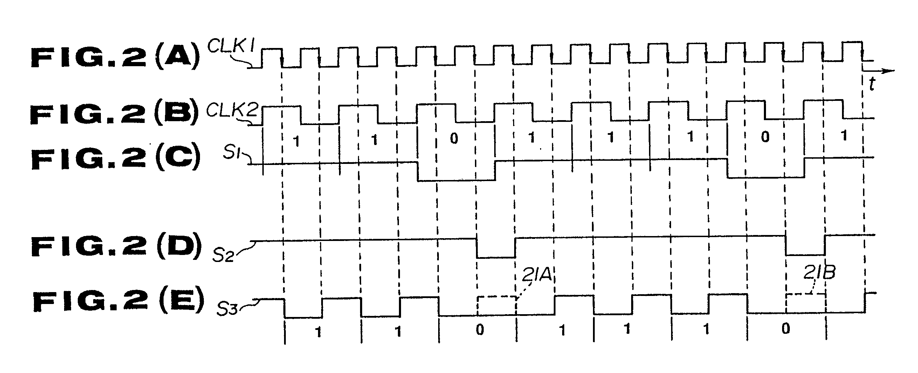

An operation in a case where the 16-bit data DH ( ---11011101---) in which the input data D is converted will be described with reference to Fig. 2.

4

In this case, the data DH is shifted in synchronization with the clock pulse CLK2 (Fig. 2 (B)) to provide a signal $S_1$ (Fig. 2 (C)). The end of the data of the signal $S_1$ corresponds to the rising edge of the clock signal CLK2. In addition, the clock pulse CLK1 (refer to Fig. 2 (A)) is a signal whose frequency is twice the clock pulse frequency CLK2. The signal $S_2$ provides the low level of "0" only when the inverted clock pulse CLK1 rises with both the signal $S_1$ and clock pulse CLK2 at the low levels of "0" (,i.e., the actual clock pulse CLK1 falls) so that the signal $S_2$ provides the low level "0" only in the vicinity to an interval of a low level "0" of the signal $S_1$ as shown in Fig. 2 (D).

In addition, when the J-K flip-flop circuit 14 serves as a binary counter when the input signals of the J and K terminals of the J-K flip-flop circuit 14 are at the high levels of "1". When both of the J and K terminals are at low levels of "0", the same output data is maintained.

In addition, when the output signal $S_3$ of the J-K flip-flop circuit 14 has received the clock pulse with the signal $S_2$ at the low level of "0", the output signal $S_3$ is forcibly set to the low level of "0". The waveform of the signal $S_3$ is shown in Fig. 2 (E). That is to say, the waveform of the signal $S_3$ is such that the pulses 21A, 21B, ---, are removed. The special bi-phase modulation is such as to generate the signal $S_3$ (Fig. 2 (E)) from the signal $S_1$ (Fig. 2 (C)).

In the preferred embodiment, since the redundancy of the signal $S_3$ as the record data corresponding to the input data D is twice the input data and, therefore, the redundancy is small as compared with the previously proposed modulation method, a large amount of auxiliary data can be recorded over a relatively short control track range.

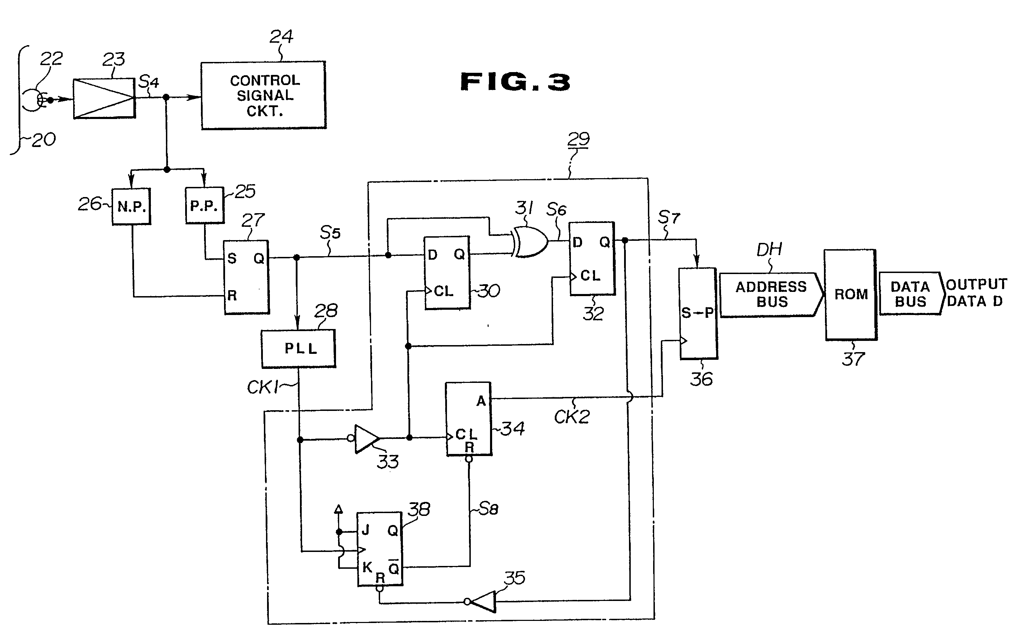

Fig. 3 shows a reproducing portion of the preferred embodiment.

A signal $S_4$ is generated via playback head 22 and reproducing amplifier 23 from a control track on which the auxiliary data of the video tape 20 is recorded. This signal $S_4$ is supplied to the control signal circuit 24 for speed servo control purposes. It is noted that a VTR for a home use may be provided only with a control signal circuit 24 and the circuit for reading the auxiliary data to be described hereinlater will generally be omitted from such home units.

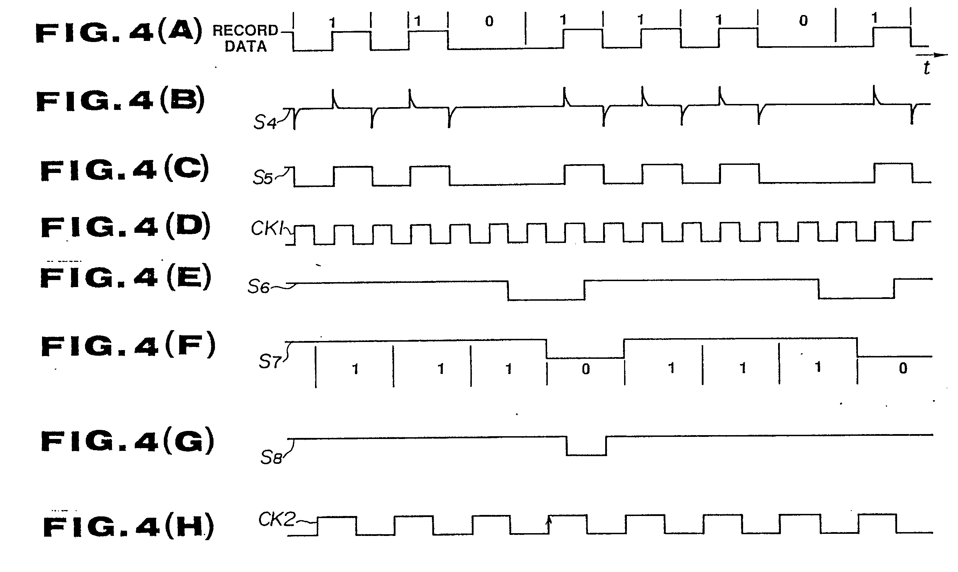

The reproduced signal $S_4$ is, furthermore, supplied to a positive pulse extracting circuit 25 and a negative pulse extracting circuit 26, the output pulses of these extracting circuits 25 and 26 being supplied to set terminal S and reset terminal R of the S-R flip-flop circuit 27. As appreciated from Fig. 4 (A) through 4 (B), the pattern of the output signal $S_3$ coincides with that of the recorded data on the video tape 20. Numeral 28 denotes a PLL (Phase Locked Loop) and numeral 29 denotes a demodulation circuit for carrying out the special bi-phase mark demodulation. The output signal $S_5$ of the S-R flip-flop circuit 27 is directly transmitted to the demodulation circuit 29 and transmitted thereto via the PLL circuit 28. The PLL circuit 28 includes a phase comparator, low pass filter, voltage controlled oscillator, and a frequency divider. An output signal CK1 derived from a reference intput portion of the phase comparator, i.e., frequency divider output is supplied to the clock terminal of the J-K flip-flop circuit 38 and negative logic inverter. The output signal CK1 has a frequency twice the frequency of the first portion of the signal $S_5$. This is appreciated from Figs. 4 (C) and 4 (D).

The signal $S_5$ is supplied to the D terminal of a D type flip-flop circuit 30 and to one input terminal of an Exclusive-OR gate circuit 31. The other input terminal of the Exclusive-OR gate circuit 31 receives the output signal of the flip-flop circuit 30. The output signal $S_6$ of the Exclusive-OR gate circuit 31 is supplied to the D terminal of the D type flip-flop circuit 32. An output signal $S_7$ of the flip-flop circuit 32 indicates a demodulated output of the demodulator 29 in the preferred embodiment.

In addition, in the demodulator 29, the signal generated from the PLL circuit 28 (referred hereinafter to as a clock pulse CK1) is supplied to the inverter 33 and to the clock terminal of the J-K flip-flop circuit 38 of a synchronization reset type). The output signal of the inverter 33 is supplied to clock terminals of the flip-flop circuits 30 and 33 and the clock terminal of a binary counter 34 with a synchronization clear terminal for frequency division by half. Then, a signal of a high level "1" is supplied to the J and K terminals of the flip-flop circuit 38. An inverted signal $S_8$ of the flip-flop circuit 38 is supplied to a reset terminal R of the binary counter 34. An output signal $S_7$ of the flip-flop circuit 32 is fed back to the reset terminal R of the flip-flop circuit 38. Each reset terminal shown in Fig. 3 uses the negative logic system.

The output signal $S_7$ of the demodulator 29 is supplied to a data input terminal of the serial-to-parallel (S - P) converter 36. The output signal (hereinafter referred to as the clock pulse CK2) of the binary counter 34 in the demodulator 29 is supplied to the clock terminal of the serial-to-parallel converter 36. A 16-bit output data DH of the serial-to-parallel converter 36 is supplied to an address bus of a ROM (Read Only Memory) 37. The 8-bit data bus of the ROM 37 is used to read the output data D of 8 bits. The ROM 37 is used to perform an inverse of the conversion of the ROM 8 of Fig. 1.

An operation of the reproducing portion shown in Fig. 3 when the record data to be recorded on the control track of the video tape 20 indicates ( ---11011101 ---) will be described with reference to Fig. 4.

A signal $S_5$ of Fig. 4 (C) can directly be deemed as the record data.

In this case, the clock pulse CK1 of Fig. 4 (C) is generated as shown in Fig. 4 (C). In the preferred embodiment, since two or more occurences of "0" level continous pulses are not generated in the signal $S_5$ (record data, refer to Fig. 2), the synchronization of the PLL circuit 28 is not disturbed and so-called self clocking becomes possible. Hence, since no generating means for for generating a window signal as described in the BACKGROUND OF THE INVENTION is needed, the mechanical portion therefor can be simplified.

In addition, the output signal $S_6$ of the Exclusive-OR gate circuit 31 is such as shown in Fig. 4 (E). The inversed pulse of the clock pulse CK1 is changed as a signal S7 (demodulation signal) such as shown in Fig. 4 (F) in which the inversed signal thereof is used as a trigger pulse for synchronizing the signal $S_6$. In other words, the signal $S_7$ is a signal by which the special bi-phase modulation is carried out over the signal $S_6$.

Furthermore, the clock pulse CK2 (refer to Fig. 4 (H)) derived by dividing the reversed pulse of the clock pulse CK1 by two can be used as a clock pulse for the serial-to-parallel converter 36. It is noted that the reversed output signal $S_8$ of the flip-flop circuit 38 is used to guarantee that the clock pulse CK2 rises at a boundary of the data of the signal $S_7$.

In addition, as to the 8-bit-to-16-bit conversion in the preferred embodiment, in so-called compact discs, 8-bit-to-14-bit conversion is carried out. However, the bit conversion of the compact disc is carried out in order to lower the record density. The conversion in the preferred embodiment is to consequently raise the record density. These are different concepts entirely.

As desribed hereinabove, since in the magnetic recording method and system according to the present invention, the unmodulated portion of the control signal is reduced, self clocking by means of the control signal becomes possible and the mechanical portion can be simplified. Furthermore, since the predetermined signal can be recorded on the control track with a relatively small redundancy, a relatively large amount of data can be recorded over a short region of the control track. In addition, since the redundancy is small, an error correction code can easily be added to the data to be recorded.

It will fully be appreciated by those skilled in the art that the foregoing description may be made in terms of the preferred embodiment and various changes and modifications may be made without departing from the scope of the present invention which is to be defined by the appended claims.

## Claims

1. A system for recording data on a predetermined track of a recording medium, comprising:
   a) a first circuit for generating and transmitting data having a predetermined number of bits;
   b) a second circuit responsive to the data derived from the first circuit for converting the data into new data in which consecutive ocurrences of at least one of a high level or a low level data component is limited to a predetermined value;
   c) a third circuit for Bi-phase mark modulating the new data derived by the second circuit; and
   d) a fourth circuit for recording the Bi-phase mark modulated data onto the predetermined track.

2. A system as set forth in claim 1, wherein the second circuit comprises a special bi-phase modulation circuit.

3. A system as set forth in claim 2, wherein the second circuit converts the data derived from the first circuit into the new data in such a way that data derived from the first circuit is converted into new data having 16 bits in which a low level or "0" data component does not occur consecutively more than twice.

4. A system as set forth in claim 3, wherein the second circuit comprises a ROM (Read Only Memory) having a table listing the new data according to the input data derived from the first circuit.

5. A system as set forth in claim 4, wherein the third circuit further comprises a frequency divider for providing another clock pulse CLK2 having a frequency half that of the clock pulse CLK1 and wherein the special bi-phase modulation circuit carries out the special bi-phase modulation using the clock pulses CLK1 and CLK2 such that in the high level data components in the converted new data, a level conversion is carried out at a half time of a bit cell representing the bit data and with the low level data components in the converted data, no level conversion is carried out in the bit cell representing the bit data or at a boundary of the bit cell subsequent to the low level of data, the high level data conversions being carried out in synchronization with a falling edge of the clock pulse CLK1.

6. A system as set forth in claim 5, wherein the special bi-phase modulation circuit comprises: an OR gate circuit having two input terminals, one of the input terminals receiving the converted data derived from a serial-to-parallel converter connected to the ROM and the other input terminal receiving the clock pulse CLK2; a negative logic AND gate circuit having two inverting input terminals, one of the input terminals thereof receiving the converted data derived from the serial-to-parallel converter and the other input terminal receiving the clock pulse CLK2; a negative logic inverter receiving the clock pulse CLK1; a J-K flip-flop circuit having a clock terminal connected to an output terminal of the negative logic inverter, a J input terminal thereof connected to a K terminal connected to an output terminal of the OR gate circuit; and D type flip-flop circuit having a D terminal thereof connected to an output terminal of the negative logic AND gate circuit, a clock terminal thereof connected to the output terminal of the negative logic inverter, and a Q terminal thereof connected to a negative logic reset terminal of the J-K flip-flop circuit, the Q terminal of the J-K flip-flop circuit connected to the fourth circuit.

7. A system as set forth in claim 6, wherein the data derived from the first circuit has eight bits and is transmitted to the ROM via an address bus.

8. A system as set forth in claim 7, wherein the clock pulse CLK2 is transmitted to the serial-to-parallel converter.

9. A system as set forth in claim 1, wherein the predetermined track of the recording medium is a control track provided along a lateral length of a video tape.

10. A system as set forth in claim 9, which further includes a play back head, a reproducing amplifier for providing a control signal recorded on the control track of the video tape and a control signal processing circuit for providing the control signal as a speed servo control of a video tape apparatus.

11. A system as set forth in claim 10, which further includes: a positive going pulse extracting circuit and a negative going pulse extracting circuit, both connected to the reproducing amplifier; an S-R flip-flop circuit having a S terminal thereof connected to the positive going pulse extracting circuit and an R terminal thereof connected to the negative going pulse extracting circuit; a PLL (Phase Locked Loop) circuit connected to an output Q terminal of the S-R flip-flop circuit for twice multiplying the frequency of the output signal of the D-type flip-flop circuit; a special bi-phase demodulation circuit connected to an output terminal of the PLL circuit and to the output Q terminal of the D-type flip-flop circuit; a serial-to-parallel converter connected to the special bi-phase demodulation circuit for converting the serial data derived from the special bi-phase demodulation circuit into parallel data; a ROM having the ROM table for converting the parallel 8-bit data from the serial-to-parallel converter into into 8-bit data which is the same as the data derived from the first circuit.

12. A system as set forth in claim 11, wherein the special bi-phase demodulation circuit comprises: a first D type flip-flop circuit having a D terminal conencted to the output Q terminal of the S-R flip-flop circuit; a negative logic inverter connected to the output terminal of the PLL circuit, the clock terminal of the first D type flip-flop circuit connected to an output terminal of the negative logic inverter; a J-K flip-flop circuit having the clock terminal connected to the output terminal of the PLL circuit and the J and K terminals connected to the high level bias supply; a binary counter having the clock terminal connected to the output terminal of the negative logic inverter, a negative reset terminal connected to an output Q terminal of the J-K flip-flop circuit, and an A output terminal conencted to a clock terminal of the serial-to-parallel converter; an Exclusive-OR gate circuit having two input terminals, one of the input terminals connected to the output Q terminal of the S-R flip-flop circuit and the other input terminal thereof connected to an output Q terminal of the D type flip-flop circuit; a second D type flip-flop circuit having a D terminal connected to an output terminal of the Exclusive-OR gate circuit, a clock terminal connected to the output terminal of the negative logic inverter, and an output Q terminal connected to an input terminal of the serial-to-parallel converter; and a second negative logic inverter having an input terminal connected to the output Q terminal of the second D type flip-flop circuit and an output terminal conencted to a negative logic reset terminal of the J-K flip-flop circuit.

**13.** A method for recording data on a predetermined track of a recording medium, comprising the steps of:

    a) generating and transmitting data having a predetermined number of bits;

    b) converting the data into new data in which consecutive ocurrences of at least one of a high level or a low level data component is limited to a predetermined value;

    c) Bi-phase mark modulating the new data derived in the step b; and

    d) recording the Bi-phase mark modulated data onto the predetermined track.

# FIG.1

EP 0 430 283 A2

FIG.2 (A) CLK1

FIG.2 (B) CLK2

FIG.2 (C) S1    1    1    0    1    1    1    0    1

FIG.2 (D) S2

FIG.2 (E) S3    21A    21B
1    1    0    1    1    1    0

t

# FIG. 3

FIG. 4(A) RECORD DATA

1 | 1 | 0 | 1 | 1 | 1 | 0 | 1

t

FIG. 4(B) S4

FIG. 4(C) S5

FIG. 4(D) CK1

FIG. 4(E) S6

FIG. 4(F) S7

1 | 1 | 1 | 0 | 1 | 1 | 1 | 0

FIG. 4(G) S8

FIG. 4(H) CK2

EP 0 430 283 A2

# FIG.5

# FIG.6(A) RECORD DATA

# FIG.6(B)

# FIG.6(C)

# FIG.7(A) RECORD DATA

# FIG.7(B)

# FIG.7(C)